(19) Europäisches Patentamt / European Patent Office / Office européen des brevets

(11) **EP 1 913 851 B1**

(12) **FASCICULE DE BREVET EUROPEEN**

(45) Date de publication et mention
de la délivrance du brevet:
**15.07.2009 Bulletin 2009/29**

(51) Int Cl.:
*A47J 31/54* *(2006.01)*    *F24H 1/10* *(2006.01)*

(21) Numéro de dépôt: **07124079.0**

(22) Date de dépôt: **09.09.2005**

(54) **Dispositif de chauffage d'un liquide et procede pour chauffer un liquide**

Vorrichtung zum Erhitzen einer Flüssigkeit und Verfahren zum Erhitzen einer Flüssigkeit

Liquid heating device and method for heating a liquid

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **13.09.2004 EP 04021674**

(43) Date de publication de la demande:
**23.04.2008 Bulletin 2008/17**

(62) Numéro(s) de document de la (des) demande(s)
initiale(s) en application de l'article 76 CBE:
**05782895.6 / 1 809 151**

(73) Titulaire: **Nestec S.A.**
**1800 Vevey (CH)**

(72) Inventeurs:
• **Boussemart, Christophe S.**
**74500, LUGRIN (FR)**
• **Pulzer, Jean-Bernard**
**2123, Saint-Sulpice (CH)**

(74) Mandataire: **Schnyder, Frank Simon et al**
**Avenue Nestlé 55**
**1800 Vevey (CH)**

(56) Documents cités:
**EP-A- 1 074 210**      **GB-A- 2 152 012**
**US-B1- 6 246 831**      **US-B1- 6 459 854**

## Description

La présente invention concerne un dispositif de chauffage d'un fluide destiné à équiper une machine pour la préparation de boissons chaudes.

On connaît déjà des brevets EP 1 380 243, on US 6 459 854 ou GB 2 152 012 des dispositifs de chauffage destinés notamment à équiper des machines à café. Un de ces dispositifs de chauffage comprend un tube métallique dans lequel peut circuler le liquide à chauffer à partir d'un canal d'entrée vers un canal de sortie. La surface extérieure du tube est recouverte sur plusieurs sections de sa longueur d'une pluralité de jeux de résistances électriques en série. Un insert cylindrique s'étend dans le tube pour former, avec la paroi intérieure du tube, un canal hélicoïdal pour la circulation du liquide et ainsi favoriser une circulation turbulente et un transfert d'énergie rapide du tube au liquide. Un débitmètre est par ailleurs disposé en amont du canal l'entrée. Le dispositif comprend en outre une pluralité de capteurs de température répartis sur le tube à l'entrée et à la sortie de chaque jeu de résistances. Le principe de distribution de l'énergie de chauffage au liquide est ici basé sur la modulation de la puissance électrique développée par les résistances qui peuvent être commutées indépendamment les unes des autres ou en série en fonction de la température de l'eau à l'entrée du canal.

Bien que ce dispositif donne des résultats satisfaisants en termes de rapidité de chauffage, ce dispositif est relativement encombrant en ce que le volume d'eau à chauffer détermine la hauteur du tube, et il est onéreux en ce qu'il nécessite l'impression de résistances sous forme de films épais à la surface du tube (appelés couramment "thick films").

En outre, la précision de la régulation de la température du liquide est limitée par le fait que le liquide ne vient pas directement en contact avec les capteurs qui sont disposés à l'extérieur du tube. La vitesse de réponse à des différences de températures, due à l'inertie du liquide à chauffer, est aussi plus lente, ce qui nuit à la précision de la régulation de la température. A noter également que la proximité des capteurs de température des jeux de résistances risque d'influencer la mesure de manière non contrôlable en raison de la conduction thermique qui se produit au travers de la paroi du tube.

Dans le domaine des machines à café les débits d'eau à chauffer pour préparer un café sont relativement faibles typiquement de l'ordre de quelques dizaines de ml/min. Or, les débitmètres disponibles sur le marché sont peu précis pour la mesure de débits inférieurs à 200ml/min. Les incertitudes de mesures du débit dans cette application constituent donc un problème supplémentaire pour le calcul précis de l'énergie à fournir pour atteindre la température de consigne en sortie du dispositif. Dans le brevet EP 1 380 243, les imprécisions dues au débit-mètre ne sont donc pas corrigées avant que le fluide ne quitte le dispositif de chauffage puisque seule la température d'entrée est prise en compte dans le calcul de la quantité d'énergie à fournir au dispositif.

De plus, ce document est silencieux sur les réalisations pratiques permettant l'agencement des capteurs de température à la surface du tube, un tel agencement paraissant en tout état de cause délicat en raison de la technologie proposée pour réaliser les jeux de résistances.

Le brevet US 6 246 831 se rapporte à un système de contrôle de chauffage de fluide pour le chauffage domestique ou une citerne individuelle comprenant plusieurs chambres de chauffe contenant des éléments chauffants électriques en continu. La régulation de température se base sur des capteurs de températures dans chaque chambre et en déterminant une déviation entre une température de consigne et la somme des températures mesurées dans chaque chambre. Une commande répond ensuite rapidement aux changements de température et modifie le calcul de puissance en agissant sur la modulation de puissance. Une telle méthode ne tient toutefois pas compte de variations instantanées de la quantité réelle de fluide circulant dans le dispositif; cette quantité étant basée sur une méthode de calcul indirecte. Ainsi des changements soudains des conditions opérationnelles peuvent rendre ce calcul inefficace, ce qui rend le système adapté essentiellement à des conditions d'écoulement stables mais inadapté pour la production d'eau chaude dans une machine à café enregistrant des brusques variations de débit.

L'invention concerne un dispositif de chauffage d'un fluide, en liquide chaud ou en vapeur, pour la préparation de café ou autres boissons chaudes, comprenant un corps muni d'un canal pour la circulation d'un fluide, ledit canal ayant une entrée de fluide et une sortie de fluide reliée par un conduit à un dispositif utilisateur, le canal étant associé à au moins un corps de chauffe électrique dont l'alimentation est commandée par des moyens de commutation reliés à des moyens de commande; le dispositif comprenant en outre au moins un capteur de température disposé dans ledit canal ou à la sortie dudit canal et étant en contact direct avec le fluide circulant dans ledit canal, ledit capteur de température étant relié audits moyens de commande; les moyens de commande et de commutation étant configurés pour commander le corps de chauffe pour amener le fluide à chauffer d'une première température jusqu'à une température de consigne dans la région du canal où ledit capteur est disposé, le dispositif étant **caractérisé en ce qu'**il comprend en outre une électrovanne raccordée audit conduit entre la sortie de fluide et ledit dispositif utilisateur et qui est commandée par lesdits moyens de commande, et en ce que lesdits moyens de commande sont agencés pour commander l'électrovanne de façon à diriger le fluide provenant de la sortie de fluide vers un bac de drainage ou une boucle de recirculation, lorsque la température mesurée par ledit capteur n'a pas encore atteint la température de consigne et vers le dispositif utilisateur lorsque la température mesurée a atteint la température de consigne.

La température de consigne peut être une température intermédiaire théorique du dispositif lorsque ledit capteur de température est disposé de manière à mesurer une température intermédiaire dans ledit canal. Dans une variante, la température de consigne est la température en sortie souhaitée lorsque le capteur de température est disposé à la sortie du canal de manière à mesurer la température du fluide à la sortie du dispositif.

Grâce à ces caractéristiques on s'assure que le fluide à destination du dispositif utilisateur, typiquement une unité d'extraction d'une substance par exemple du café ou une buse d'éjection de vapeur, arrive toujours dans ce dispositif à une température suffisante même lorsque le dispositif est utilisé dans la journée pour la première fois. Compte tenu de la faible inertie thermique du dispositif, la période de dérivation dans le bac de drainage, est en général de l'ordre de quelques secondes seulement (Typiquement, de 3-6 secondes). Cet arrangement permet donc de préparer rapidement des boissons de qualité constante indépendamment d'éventuelles fluctuations au niveau du dispositif de chauffage.

D'autres caractéristiques et avantages de la présente invention ressortiront plus clairement de la description détaillée qui suit de modes de réalisation du dispositif de chauffage selon l'invention, donnés à titre purement illustratif et non limitatif, en liaison avec les dessins annexés sur lesquels :

- la figure 1 est une vue en perspective partiellement arrachée d'un dispositif de chauffage d'un liquide ;
- la figure 2 est une vue schématique d'une machine à café comprenant le dispositif de chauffage de la figure 1, le dispositif de chauffage étant représenté en coupe ;
- la figure 3 est une vue en perspective d'un dispositif de chauffage d'un liquide ;
- la figure 4 est une vue schématique d'une machine à café comprenant le dispositif de chauffage de la figure 3, le dispositif de chauffage étant représenté en coupe et
- la figure 5 est une vue similaire à la figure 4 illustrant l'invention.

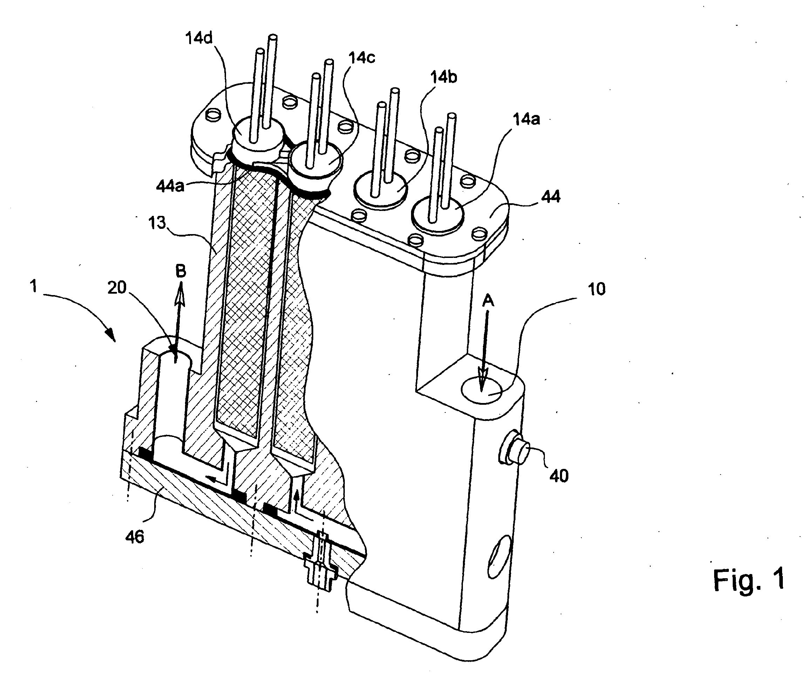

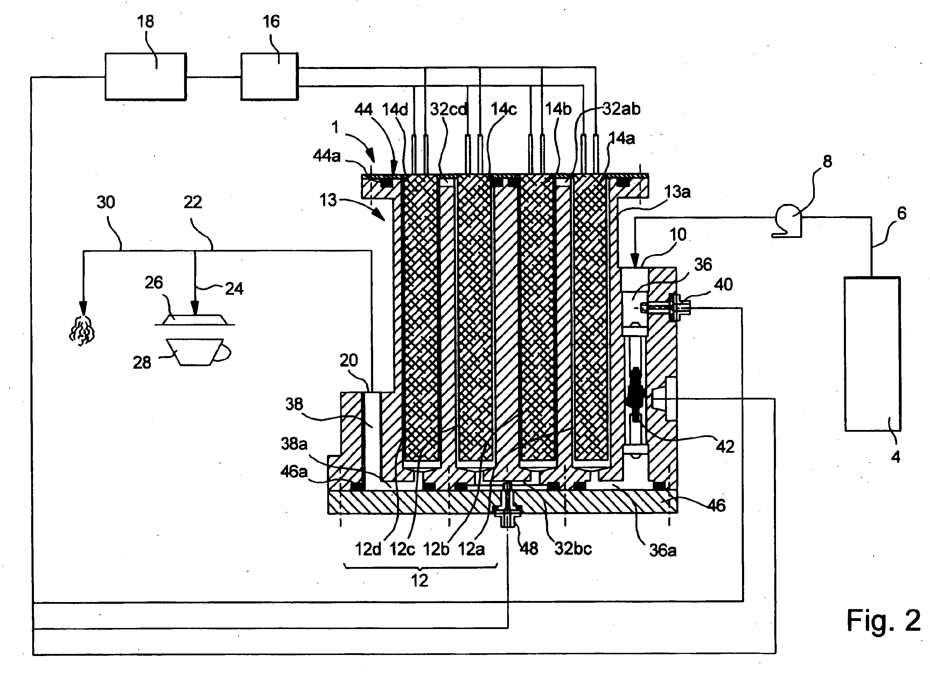

En se référant aux figures 1 et 2, on voit illustré à titre d'exemple un dispositif de chauffage d'un liquide selon un premier mode de réalisation désigné par la référence numérique générale 1, intégré dans une machine à café 2 (figure 2) qui peut indifféremment être destinée à un usage ménager ou industriel. A noter que la nature du liquide à chauffer dans le dispositif de chauffage n'est pas critique et que le liquide peut être quelconque par exemple de l'eau, du lait, une boisson chocolatée etc.. Dans l'application du dispositif de chauffage illustré, le liquide à chauffer est de l'eau. La machine à café 2 illustrée à la figure 2 comprend un réservoir d'eau froide 4 relié via une conduite 6 à une pompe 8 qui alimente en eau le dispositif de chauffage 1 via une entrée de liquide 10. L'eau circule à travers un canal 12 prévu dans un corps 13 du dispositif de chauffage 1. Le canal 12 est associé à des corps de chauffe 14a, 14b, 14c et 14d, dont l'alimentation électrique est commandée par des moyens de commutation 16 reliés à des moyens de commande 18. Les corps de chauffe sont ainsi immergés dans le liquide à chauffer et en contact direct avec celui-ci. L'eau sort du dispositif de chauffage via une sortie de liquide 20 puis circule à travers un conduit 22 pour arriver à travers un conduit 24 sur une cartouche 26 contenant une substance destinée à former une boisson telle que du café à partir de café torréfié et moulu ou de café soluble, du thé, du chocolat ou autres boissons chaudes. La cartouche 26 est, par exemple, une cartouche scellée qui s'ouvre sous la pression du liquide conformément à ce qui est décrit dans le brevet européen No 512 468. Le café coule ensuite dans une tasse 28. La machine permet également de produire de la vapeur via un conduit 30 relié au conduit 22. A la figure 1, la direction de circulation d'eau à travers le dispositif de chauffage est indiquée par les flèches A et B.

Dans le dispositif de chauffage 1, le canal 12 comprend quatre portions de canal 12a, 12b, 12c et 12d, reliées successivement entre elles par trois conduits de liaison 32ab, 32bc et 32cd. Les portions de canal 12a, 12b, 12c et 12d définissent chacune une chambre qui reçoit un corps de chauffe14a, 14b, 14c et 14d. On notera à ce propos que les conduits de liaison 32ab, 32bc et 32cd présentent des sections transversales inférieures à celles des chambres 12a, 12b, 12c et 12d. Les chambres 12a, 12b, 12c et 12d sont arrangées parallèles entre elles et juxtaposées dans un bloc 13a que comprend le corps 13. Les chambres 12a, 12b, 12c et 12d débouchent toutes sur un premier côté du bloc 13a à une première de leurs extrémités par laquelle les corps de chauffe 14a, 14b, 14c et 14d sont introduits dans les chambres12a, 12b, 12c et 12d. Les deuxièmes extrémités des chambres 12a, 12b, 12c et 12d débouchent sur un deuxième côté du bloc 13a opposé au premier et les chambres 12a, 12b, 12c et 12d sont reliées entre elles à une de leurs extrémités par les trois conduits de liaison 32ab, 32bc et 32cd. La chambre 12a est reliée d'une part à l'entrée de liquide 10 via un conduit 36 par son extrémité disposée du deuxième côté du bloc 13a et d'autre part à la chambre 12b via le conduit de liaison 32ab par son extrémité disposée du premier côté du bloc 13a. La chambre 12b est reliée à la chambre 12c via le conduit de liaison 32bc par son extrémité disposée du deuxième côté du bloc 13a. La chambre 12c est reliée à la chambre 12d via le conduit de liaison 32cd par son extrémité disposée du premier côté du bloc 13a et la chambre 12d est reliée à la sortie de liquide 20 via un conduit 38 par son extrémité disposée du deuxième côté du bloc 13a.

On notera que chaque corps de chauffe 14a, 14b, 14c et 14d s'étend sensiblement sur toute la longueur de la chambre à laquelle il est associé et présente une forme sensiblement complémentaire à celle de la chambre à laquelle il est associé. Selon une variante avantageuse (non représentée), la surface extérieure des corps de chauffe et/ou la paroi intérieure de la chambre qui lui est associée présente un rainurage hélicoïdal, ce qui permet d'allonger le trajet du liquide pendant lequel il est en contact avec les corps de chauffe et sa vitesse; donc augmenter le coefficient d'échange de chaleur; sans pour cela augmenter l'encombrement du dispositif de chauffage.

Le dispositif de chauffage 1 comprend en outre un capteur de température 40 disposé dans le conduit 36 reliant l'entrée de liquide à l'entrée de la chambre 12a. Ce capteur 40 est arrangé pour venir en contact direct avec le liquide à chauffer et pour mesurer la température du liquide à chauffer à l'entrée du dispositif de chauffage, c'est-à-dire avant qu'il ne soit venu en contact avec un des corps de chauffe du dispositif 1. Un débitmètre 42 est également prévu dans le conduit 36, donc en amont de la chambre 12a.

Comme cela est visible à la figure 2, le corps 13 comprend en outre deux couvercles 44, 46 qui s'étendent respectivement du premier et du deuxième côté du bloc 13a et recouvrent les deux extrémités de chacune des chambres 12a, 12b, 12c et 12d. Le couvercle 44 qui se trouve du premier côté du bloc 13a porte les corps de chauffe 14a, 14b, 14c, et 14d tandis que le couvercle 46 qui se trouve du deuxième côté du bloc 13a porte un capteur de température intermédiaire 48. Le capteur de température intermédiaire 48 est associé au conduit de liaison 32bc et est agencé pour venir en contact direct avec le liquide à chauffer circulant dans le conduit.

Le capteur de température d'entrée 40, le débitmètre et le capteur de température intermédiaire 48 sont reliés aux moyens de commande 18 du dispositif 1.

Le couvercle 44 ferme une première extrémité des chambres 12a, 12b, 12c et 12d et délimite en outre avec le bloc 13a les conduits de liaison 32ab et 32cd. Le couvercle 46 ferme la deuxième extrémité des chambres 12a, 12b, 12c et 12d et délimite le conduit 32bc avec le bloc 13a. Le couvercle 46 délimite en outre un canal 36a reliant le conduit 36 à la chambre 12a ainsi que le canal 38a reliant la chambre 12d au conduit 38. Typiquement, les couvercles 44 et 46 sont fixés sur le bloc 13a au moyens de vis (non représentées) et l'étanchéité est assurée au moyen de joints O ring 44a, 46a interposés entre les couvercles 44, 46 et le bloc 13a.

Les moyens de commande 18 et les moyens de commutation 16 sont configurés pour commander les corps de chauffe 14a, 14b, 14c et 14d. Ces moyens de commande 16 sont particulièrement agencés pour commander les corps de chauffe 14c et 14d disposés respectivement dans les chambres 12c, 12d situées en aval du capteur de température intermédiaire 48 en fonction de la quantité d'énergie utile à apporter dans les chambres 12c et 12d pour amener le liquide à chauffer de la température intermédiaire mesurée par le capteur de température intermédiaire 48 jusqu'à une température de consigne contenue par exemple dans une mémoire des moyens de commande 18.

Les corps de chauffe 14a, 14b, 14c, et 14d comprennent chacun une résistance. Les résistances sont reliées aux moyens de commutation 16 et les moyens de commande 18 sont agencés de manière à pouvoir commuter les résistances indépendamment les unes des autres. Le principe de distribution de l'énergie est basé sur les impulsions données par le débit-mètre (par exemple tous les 100 ms ou moins). A chaque impulsion du débit-mètre correspond une énergie soit un temps de chauffe donné sur les corps de chauffe. Ce système proportionnel permet de réagir à des variations rapides du débit; ce qui peut être le cas au cours du cycle d'extraction d'une capsule, en particulier, au moment du perçage de la capsule. Chaque résistance développe une puissance nominale inférieure à la valeur de puissance théorique de scintillement du réseau, typiquement inférieur à 450W sous 230V. Selon la norme IEC 1000-3-3, la puissance maximale pouvant être commutée sur toute la gamme de fréquences est d'environ 380W. Pour éviter les écarts de puissance en valeur absolue supérieurs à la puissance nominale de chacune des résistances, les moyens de commande 18 sont agencés pour commuter les résistances des corps de chauffe de l'état "en circuit" à l'état "hors circuit" et vice-versa de manière intermittente et non simultanée. La commutation se fait toujours au passage à zéro de la tension pour éviter l'introduction de perturbation dans le réseau électrique.

Les moyens de commande 18 comprennent en outre des moyens de régulation qui sont prévus pour calculer la quantité d'énergie à affecter aux corps de chauffe 14c, 14d disposés dans les portions de canal 12c, 12d situées en aval du capteur de température intermédiaire 48, en fonction des températures d'entrée et intermédiaire mesurées et du débit mesuré par le débitmètre 42. D'autres facteurs peuvent être pris en compte dans le calcul de la quantité d'énergie, notamment la mesure de la tension du réseau (par exemple 230V). La quantité d'énergie peut être corrigée par un facteur de correction basé sur la fluctuation entre la tension réellement mesurée du réseau et la tension nominale théorique. Ce facteur indique si la tension réelle est supérieure ou inférieure à la tension nominale, par exemple, de 230V. Ce facteur est mis à jour lorsque les résistances sont enclenchées afin de tenir aussi compte des chutes de tension dans la ligne d'alimentation.

Les moyens de régulation comprennent généralement un microcontrôleur, de la mémoire et des programmes de calcul des bilans énergétiques et des facteurs de correction à appliquer. Les calculs des bilans énergétiques, des corrections et les commutations des corps de chauffe, par le microcontrôleur se font à intervalles de temps très courts de façon à constamment réguler les quantités d'énergie apportées aux corps de chauffe. Les intervalles pour les calculs des quantités d'énergie sont, de l'ordre de quelques millisecondes, préférablement, de moins de 100 ms, par exemple toutes les 30 ms.

Le mode de régulation automatique est basé sur le principe suivant. Une mesure de température du liquide à l'entrée du dispositif est prise par le capteur de température 40 à l'entrée du dispositif; la quantité de liquide à chauffer est quant à elle prise par un débit-mètre 42 sur la base d'impulsions. Une température intermédiaire entre le premier et second corps de chauffe est aussi mesurée par le capteur de température 48. Dans un mode de réalisation ne comprenant pas de capteur de température à l'entrée de liquide, le système pourra partir d'une température d'entrée théorique, typiquement de la température de l'eau du réseau, mémorisée dans un microcontrôleur.

Ces mesures sont recueillies par le microcontrôleur comprenant un programme de calcul des quantités d'énergie. En particulier, le microcontrôleur calcule ainsi la quantité d'énergie théorique à fournir par le premier corps de chauffe selon la formule:

Quantité d'Energie des premiers corps de chauffe (14a, 14b,14e) = Quantité de liquide à chauffer mesurée par le débit-mètre x (T intermédiaire de consigne - T entrée mesurée) x Capacité calorifique du liquide. Un facteur de correction basé sur les variations de tension du réseau peut être appliqué à la valeur de quantité finale.

La température intermédiaire de consigne est une valeur déterminée par calcul lors de tests du dispositif et qui correspond à une valeur théorique optimale en fonction de la température mesurée de l'eau à l'entrée, la température de sortie fixée (consigne), un facteur de correction du réseau 230V, les valeurs théoriques des résistances ohmiques des éléments chauffants. Cette valeur varie en fonction de la température de sortie désirée, par exemple, pour la production d'un café ou d'une autre boisson comme du chocolat. Cette valeur est enregistrée dans le programme ou dans une mémoire du microcontrôleur.

Le microcontrôleur calcule aussi la quantité d'énergie théorique à fournir par le second corps de chauffe selon la formule:

Quantité d'énergie pour les seconds corps de chauffe (14c, 14d, 14f) = Quantité de liquide à chauffer mesurée par le débit-mètre x (Température de sortie désirée - Température intermédiaire mesurée) x Capacité calorifique du liquide. Cette quantité d'énergie peut elle aussi être corrigée pour tenir compte de la tension du réseau.

Le microcontrôleur contrôle ensuite la distribution de ces quantités d'énergie calculées, par unité de temps de chauffe, en commandant la commutation on/off des résistances contenues dans les corps de chauffe.

Toutefois, pour tenir compte des éventuelles erreurs et imprécisions comme sur la mesure du débit, les tolérances sur la puissance des résistances, la tension du réseau, ou autres, il est préférable d'appliquer un facteur de correction calculé selon la formule:

$$k = (T \text{ intermédiaire mesurée} - T \text{ entrée mesurée})/(T \text{ intermédiaire de consigne} - T \text{ entrée mesurée}).$$

Le facteur de correction est ensuite appliqué par le microcontrôleur pour ajuster la valeur de quantité d'énergie nécessaire à chauffer le liquide dans la seconde chambre afin d'obtenir la température la plus proche de la température désirée en sortie du bloc chauffant.

Ainsi, la correction sur le(s) corps de chauffe est appliquée de la manière suivante:

Quantité d'énergie corrigée du second corps de chauffe = (2-k) x Quantité d'énergie théorique du second corps de chauffe,
soit encore:

$$\text{Quantité d'énergie corrigée} = (2-K) \times \text{Capacité calorifique du liquide} \times \text{Quantité de liquide à chauffer} \times (\text{Température de sortie désirée} - \text{Température intermédiaire mesurée}).$$

Cette quantité d'énergie peut elle aussi être corrigée pour tenir compte de la tension du réseau.

Ainsi lorsque le facteur de correction est inférieur à 1; cela signifie que la quantité d'énergie réelle distribuée par le(s) corps de chauffe en amont de la sonde de température intermédiaire est trop faible et il faut donc appliquer une correction par augmentation de la quantité d'énergie distribuée par le(s) corps de chauffe situés en aval de la sonde de température intermédiaire. Lorsque le facteur est supérieur à 1, cela signifie que la quantité d'énergie réelle distribuée par le(s) corps de chauffe en amont de la sonde de température intermédiaire est trop élevée; et il faut alors appliquer une correction en diminuant la quantité d'énergie distribuée par le(s) corps de chauffe situés en aval de cette sonde. Par exemple, si le facteur de correction est calculé à une valeur de 1.10; cela signifie que la quantité d'énergie distribuée par le(s) premier(s) de chauffe est 10% trop élevée et il faudra alors appliquer une réduction de la quantité d'énergie aux second(s) corps de chauffe de 10% pour obtenir une température de sortie se rapprochant au plus près de la température désirée.

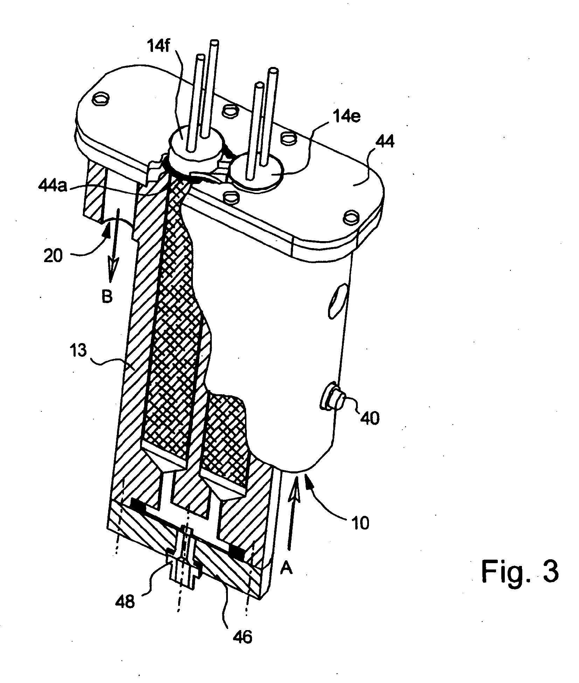

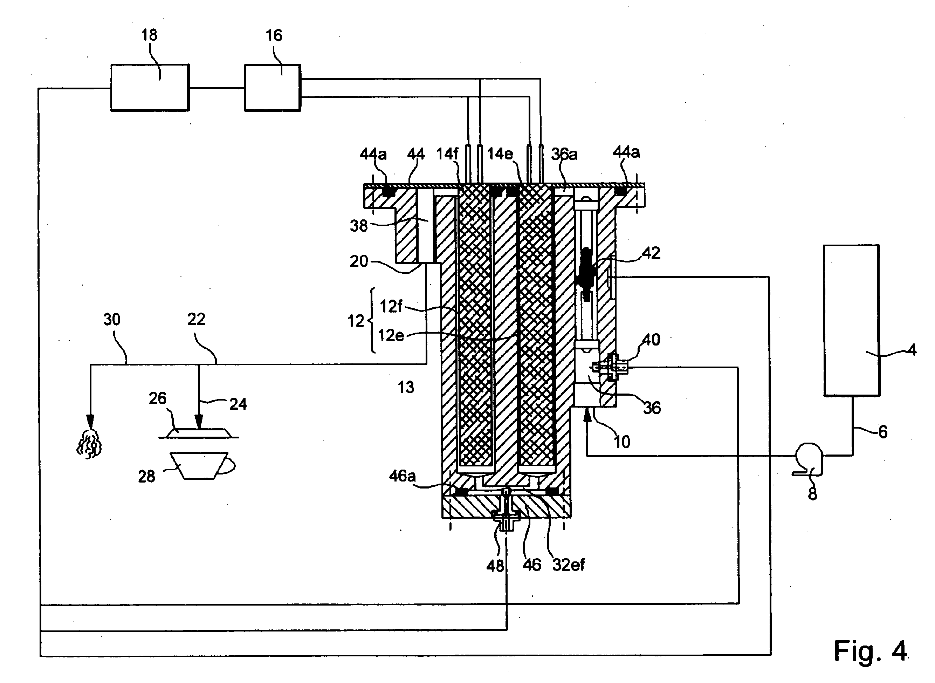

Aux figures 3 et 4 est représenté un dispositif de chauffage d'un liquide selon un deuxième mode de réalisation dans lequel les éléments identiques à ceux décrits en liaison avec les figures 1 et 2 sont désignés par les mêmes références numériques.

Ce dispositif de chauffage ne se distingue de celui décrit précédemment qu'en ce que le canal 12 prévu dans le corps 13 et à travers lequel circule le liquide à chauffer ne comprend que deux portions de canal 12e et 12f reliées entre elles par un conduit de liaison 32ef auquel est associé le capteur de température intermédiaire 48 et qu'en ce que les corps de chauffe 14e et 14f associés respectivement aux portions de canal 12e et 12f comprennent chacun deux résistances, chacune d'elles étant reliée aux moyens de commande 18 via les moyens de commutation 16.

De même que dans le premier mode de réalisation, les résistances électriques des corps de chauffe 14e et 14f développent chacune une puissance nominale inférieure à la valeur de puissance théorique de scintillement du réseau typiquement inférieure à 450W sous 230V et les moyens de commande 18 sont agencés pour commuter ces résistances de l'état "en circuit" à l'état "hors circuit" et vice-versa de manière intermittente typiquement à une fréquence de l'ordre de 10 ms. Des corps de chauffe de ce type sont par exemple de cartouches chauffantes dites "haute charge" ou "haute densité"; c'est à dire développant une puissante importante par unité de surface de chauffe.

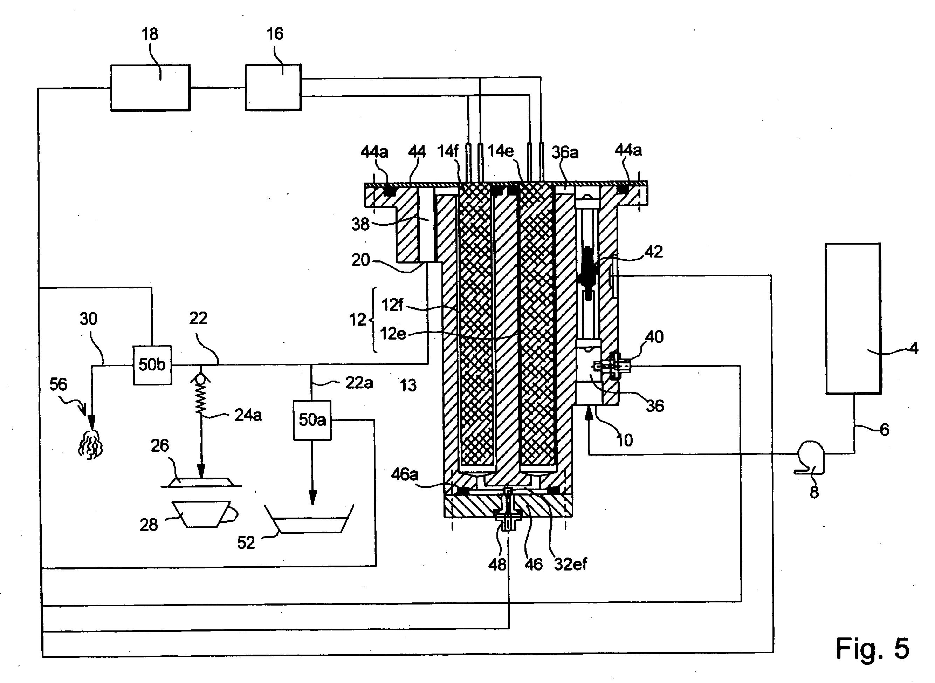

A la figure 5 est représentée schématiquement une machine à café incorporant l'invention. Dans cette figure, les éléments identiques à ceux décrits en liaison avec la figure 4 sont désignés par les mêmes références numériques.

Cette machine à café ne se distingue de celle décrite précédemment qu'en ce qu'elle comprend un dispositif permettant d'assurer la délivrance d'un "premier" liquide ou d'une "première" vapeur à la température adéquate. Pour cela, le dispositif comprend un premier conduit principal 22 relié au dispositif d'extraction 26. Une valve de contre-pression 24a du conduit 24 est disposé à l'entrée du dispositif 26. Une première électrovanne 50a est reliée à une portion de conduit 22a conduisant à un bac de draînage 52. Une deuxième électrovanne dite "vapeur" 50b est raccordée au conduit 30 disposé entre le premier dispositif utilisateur et le deuxième dispositif utilisateur formé dans l'exemple par une buse d'éjection de vapeur 56. Les électrovannes 50a, 50b sont commandées par les moyens de commande 18. Ces derniers sont agencés pour commander respectivement les électrovannes 50a, 50b de façon à diriger le fluide provenant de la sortie de fluide 20 soit vers un des deux dispositifs utilisateurs, soit vers le bac de draînage 52 selon que la température mesurée par le capteur 48 atteint ou non à la température de consigne pour le dispositif utilisateur considéré. A noter que le bac de draînage peut être remplacé par une boucle de recirculation retournant à l'entrée 10 du dispositif de chauffage. Une recirculation complique toutefois le dispositif car il peut nécessiter une pompe supplémentaire. De plus, la température de consigne est obtenue après quelques secondes seulement et la quantité d'eau rejetée est donc généralement faible.

Le dispositif fonctionne de la façon suivante:

Pour une boisson à extraire par le dispositif d'extraction 26, l'électrovanne "vapeur" 50b reste fermée. La pompe à eau 8 alimente le dispositif de chauffage qui fonctionne selon le principe déjà décrit. La température de l'eau est contrôlée en continue par le capteur de température 48. Tant que cette température est en dessous d'une température de consigne prédéterminée, le contrôleur 18 maintient l'électrovanne "de dérivation" 50a ouverte de façon à ce que l'eau sortant du dispositif de chauffage ne soit pas utilisée pour l'extraction mais soit drainée dans le bac de drainage ou recirculée. Une fois la température de consigne atteinte, le contrôleur commande la fermeture de la vanne 50a. Le fluide peut alors circuler jusqu'à forcer l'ouverture de la valve de contre-pression et alimenter le dispositif 26.

Lorsque la commande de vapeur est activée, comme pour préparer du lait moussé, le principe de montée en température est similaire. Au début du chauffage, la vanne 50b reste fermée et la vanne 50a est ouverte pour drainer ou recirculer le fluide (généralement de l'eau). Une fois la température de consigne de production de vapeur atteinte, la vanne 50a est fermée par le contrôleur et la vanne 50b est ouverte. La pression de vapeur étant trop faible pour ouvrir la valve de contre-pression 24, la vapeur alimente directement la sortie 56. Il faut noter qu'un capteur de température de sortie vers la sortie 20 du dispositif peut être utilisé pour le contrôle de la température au lieu d'un capteur de température intermédiaire.

Il va de soi que la présente invention n'est pas limitée aux modes de réalisation qui viennent d'être décrits et que diverses modifications et variantes simples peuvent être envisagées par l'homme du métier sans sortir du cadre de l'invention telle que définie par les revendications annexées. A titré d'exemple, le capteur intermédiaire 48 disposé entre la chambre 12b et 12c aux figures 1 et 2 pourrait également être disposé entre la chambre 12c et 12d, l'idée étant que le capteur de température intermédiaire soit disposé en aval d'une chambre comprenant un corps de chauffe et communiquant avec l'entrée de liquide et en amont d'une chambre comprenant un corps de chauffe et communiquant avec la sortie de liquide.

**Revendications**

1. Dispositif de chauffage d'un fluide, en liquide chaud ou en vapeur, pour la préparation de café ou autres boissons chaudes, comprenant un corps (13) muni d'un canal (12,12e,12f) pour la circulation d'un fluide, ledit canal ayant une entrée de fluide (10) et une sortie de fluide (20) reliée par un conduit (22,30) à un dispositif utilisateur (26,56), le canal étant associé à au moins un corps de chauffe électrique (14e,14f) dont l'alimentation est commandée par des moyens de commutation (16) reliés à des moyens de commande (18); le dispositif comprenant en outre au moins un capteur de température (48) disposé dans ledit canal ou à la sortie dudit canal et étant en contact direct ou indirect avec le fluide circulant dans ledit canal, ledit capteur de température étant relié audits moyens de commande; les moyens de commande et de commutation étant configurés pour commander le corps de chauffe pour amener le fluide à chauffer d'une première température jusqu'à une température de consigne dans la région du canal où ledit capteur est disposé, ledit dispositif étant **caractérisé en ce qu'**il comprend en outre au moins une électrovanne (50a,50b) raccordée audit conduit entre la sortie de fluide et ledit dispositif utilisateur et qui est commandée par lesdits moyens de commande, et **en ce que** lesdits moyens de commande sont agencés pour commander l'électrovanne de façon à diriger le fluide provenant de la sortie de fluide vers un bac de drainage (52) ou une boule de recirculation lorsque la température mesurée par ledit capteur n'a pas encore atteint la température de consigne et vers le dispositif utilisateur lorsque la température mesurée a atteint la température de consigne.

2. Dispositif selon la revendication 1, **caractérisé en ce que** le dispositif utilisateur comprend une unité d'extraction d'une substance contenue dans une cartouche (26) et/ou une buse d'éjection de vapeur (56).

3. Dispositif selon la revendication 1 ou 2, **caractérisé en ce que** le dispositif comprend en outre des moyens permettant d'engendrer une contre-pression (24a) disposés à l'entrée du dispositif utilisateur (26) et **en ce que** l'électrovanne est une vanne simple (50a) disposée sur une branche de dérivation (22a) du conduit (22).

4. Dispositif selon la revendication 1 ou 2, **caractérisé en ce que** l'électrovanne est une vanne à trois voies disposée sur le conduit, les trois voies étant respectivement raccordées à la sortie de fluide, au bac de drainage et au dispositif utilisateur.

5. Dispositif selon l'une des revendications 1 à 4, **caractérisé en ce que** le capteur de température (48) est disposé de manière à mesure une température intermédiaire dans ledit canal (12), la température de consigne étant une température intermédiaire théorique du dispositif.

6. Dispositif selon l'une des revendications 1 à 4, **caractérisé en ce que** le capteur de température est disposé à la sortie du canal de manière à mesure la température du fluide à la sortie du dispositif, la température de consigne étant la température en sortie souhaitée.

7. Dispositif selon l'une des revendications 1 à 6, **caractérisé en ce que** lesdits moyens de commande (18) sont agencés pour commander l'électrovanne (50a,50b) de façon à diriger le fluide provenant de la sortie de fluide (20) vers un bac de drainage (52) lorsque la température mesurée par ledit capteur n'a pas encore atteint la température de consigne.

8. Dispositif selon l'une des revendications 1 à 6, **caractérisé en ce que** lesdits moyens de commande sont agencés pour commander l'électrovanne de façon à diriger le fluide provenant de la sortie de fluide vers une boucle de recirculation lorsque la température mesurée par ledit capteur n'a pas encore atteint la température de consigne, et **en ce que** ledit dispositif comprend une pompe pour la recirculation.

9. Dispositif selon l'une des revendications 1 à 8, comprenant un mode d'extraction et un mode de production de vapeur et **caractérisé en ce** lesdits moyens de commande (18) sont agencés pour commander: en mode d'extraction, une première l'électrovanne (50a) de façon à diriger le fluide vers un dispositif d'extraction (26) lorsque la température mesurée a atteint la température de consigne; et, en mode de production de vapeur, une seconde électrovanne (50b) de façon à diriger le fluide vers une buse d'éjection de vapeur (56) lorsque la température mesurée a atteint la température de consigne.

10. Dispositif selon l'une des revendications 1 à 9, **caractérisé en ce que** les moyens de commande (18) et de commutation (16) sont configurés pour commander le corps de chauffe pour amener le fluide à chauffer d'une première température jusqu'à une température de consigne dans la région du canal (12) où ledit capteur (48) est disposé, la température de consigne étant variable en fonction de la température de sortie désirée, en particulier pour la production d'un café, d'un chocolat ou d'une autre boisson.

**Claims**

1. Device for heating a fluid, in the form of hot liquid or steam, for the preparation of coffee or other hot beverages, comprising a body (13) provided with a channel (12, 12e, 12f) for the circulation of a fluid, said channel having a fluid inlet (10) and a fluid outlet (20) connected by a conduit (22, 30) to a user device (26, 56), the channel being associated with at least one electric heating element (14e, 14f) of which the power supply is controlled by switching means (16) connected to control means (18); the device further comprising at least one temperature sensor (48) arranged in said channel or at the outlet of said channel and being in direct or indirect contact with the fluid circulating in said channel, said temperature sensor being connected to said control means; the control means and switching means being configured to control the heating element to bring the fluid to be heated from a first temperature up to a set temperature in the region of the channel where said sensor is arranged, said device being **characterised in that** it further comprises at least one electro-valve (50a, 50b) connected to said conduit between the fluid outlet and said user device and which is controlled by said control means, and **in that** said control means are designed to control the electro-valve so as to direct the fluid issuing from the fluid outlet towards a drainage tank (52) or a recirculation loop when the temperature measured by said sensor has not yet reached the set temperature and towards the user device when the measured temperature has reached the set temperature.

2. Device according to Claim 1, **characterised in that** the user device comprises a unit for extracting a substance contained in a cartridge (26) and/or a steam-ejecting nozzle (56).

3. Device according to Claim 1 or 2, **characterised in that** the device further comprises means permitting back pressure (24a) to be produced, arranged at the inlet of the user device (26) and **in that** the electro-valve is a single valve (50a) arranged on a bypass branch (22a) of the conduit (22).

4. Device according to Claim 1 or 2, **characterised in that** the electro-valve is a three-way valve arranged on the conduit, the three channels being respectively connected to the fluid outlet, to the drainage tank and to the user device.

5. Device according to one of Claims 1 to 4, **characterised in that** the temperature sensor (48) is arranged so as to measure an intermediate temperature in said channel (12), the set temperature being a theoretical intermediate temperature of the device.

6. Device according to one of Claims 1 to 4, **characterised in that** the temperature sensor is arranged at the outlet of the channel so as to measure the temperature of the fluid at the outlet of the device, the set temperature being the desired outlet temperature.

7. Device according to one of Claims 1 to 6, **characterised in that** said control means (18) are designed to control the electro-valve (50a, 50b) so as to direct the fluid issuing from the fluid outlet (20) towards a drainage tank (52) when the temperature measured by said sensor has not yet reached the set temperature.

8. Device according to one of Claims 1 to 6, **characterised in that** said control means are designed to control the electro-valve so as to direct the fluid issuing from the fluid outlet towards a recirculation loop when the temperature measured by said sensor has not yet reached the set temperature, and **in that** said device comprises a recirculation pump.

9. Device according to one of Claims 1 to 8, comprising an extraction method and a steam production method and **characterised in that** said control means (18) are designed to control: in extraction mode, a first electro-valve (50a) so as to direct the fluid towards an extraction device (26) when the measured temperature has reached the set temperature; and, in steam production mode, a second electro-valve (50b) so as to direct the fluid towards a steam-ejecting nozzle (56) when the measured temperature has reached the set temperature.

10. Device according to one of Claims 1 to 9, **characterised in that** the control means (18) and switching means (16) are configured to control the heating element to bring the fluid to be heated from a first temperature up to a set temperature in the region of the channel (12) where said sensor (48) is arranged, the set temperature being variable according to the desired outlet temperature, in particular for producing a coffee, a hot chocolate or a different beverage.

**EP 1 913 851 B1**

**Patentansprüche**

1. Vorrichtung (1) zum Erhitzen eines Fluids in Form von heißer Flüssigkeit oder Dampf für die Zubereitung von Kaffee oder anderen heißen Getränken, umfassend einen Körper (13), der mit einem Kanal (12, 12e, 12f) für den Umlauf eines Fluids versehen ist, der einen Fluideintritt (10) und einen Fluidaustritt (20) aufweist, der durch eine Leitung (22, 30) mit einer verbrauchenden Vorrichtung (26, 56) verbunden ist, wobei dem Kanal mindestens ein elektrischer Heizkörper (14e, 14f) zugeordnet ist, dessen Versorgung durch Schaltmittel (16) gesteuert wird, die mit Steuermitteln (18) verbunden sind; wobei die Vorrichtung außerdem mindestens einen Temperaturfühler (48) umfasst, der in dem Kanal oder am Austritt des Kanals angeordnet ist und mit dem in dem Kanal strömenden Fluid in direktem oder indirektem Kontakt ist, wobei der Temperaturfühler mit den Steuermitteln verbunden ist; wobei die Steuer- und Schaltmittel ausgebildet sind, um den Heizkörper so zu steuern, dass das zu erhitzende Fluid von einer ersten Temperatur auf eine Solltemperatur in dem Bereich des Kanals, in dem der Fühler angeordnet ist, gebracht wird, wobei die Vorrichtung **dadurch gekennzeichnet ist, dass** sie außerdem mindestens ein Elektroventil (50a, 50b) umfasst, das mit dem Kanal zwischen dem Fluidaustritt und der verbrauchenden Vorrichtung verbunden ist und durch die Steuermittel gesteuert wird, und dass die Steuermittel ausgebildet sind, um das Elektroventil so zu steuern, dass das vom Fluidaustritt kommende Fluid zu einem Ablaufbehälter (52) oder zu einer Rezirkulierungsschleife geleitet wird, wenn die von dem Fühler gemessene Temperatur die Solltemperatur noch nicht erreicht hat, und zur verbrauchenden Vorrichtung geleitet wird, wenn die gemessene Temperatur die Solltemperatur erreicht hat.

2. Vorrichtung nach Anspruch 1, **dadurch gekennzeichnet, dass** die verbrauchende Vorrichtung eine Einheit zum Extrahieren einer in einer Kartusche (26) enthaltenen Substanz und/oder eine Dampfausstoßdüse (56) umfasst.

3. Vorrichtung nach Anspruch 1 oder 2, **dadurch gekennzeichnet, dass** die Vorrichtung außerdem Mittel (24a) umfasst, die die Erzeugung eines Gegendrucks gestatten und am Eintritt der verbrauchenden Vorrichtung (26) angeordnet sind, und dass das Elektroventil ein einfaches Ventil (50a) ist, das auf einer Abzweigung (22a) der Leitung (22) angeordnet ist.

4. Vorrichtung nach Anspruch 1 oder 2, **dadurch gekennzeichnet, dass** das Elektroventil ein in der Leitung angeordnetes Dreiwegeventil ist, wobei die drei Wege mit dem Fluidaustritt, mit dem Ablaufbehälter bzw. mit der verbrauchenden Vorrichtung verbunden sind.

5. Vorrichtung nach einem der Ansprüche 1 bis 4, **dadurch gekennzeichnet, dass** der Temperaturfühler (48) so angeordnet ist, dass er eine Mitteltemperatur in dem Kanal (12) misst, wobei die Solltemperatur eine theoretische Mitteltemperatur der Vorrichtung ist.

6. Vorrichtung nach einem der Ansprüche 1 bis 4, **dadurch gekennzeichnet, dass** der Temperaturfühler am Austritt des Kanals angeordnet ist, so dass die Temperatur des Fluids am Austritt der Vorrichtung gemessen wird, wobei die Solltemperatur die gewünschte Austrittstemperatur ist.

7. Vorrichtung nach einem der Ansprüche 1 bis 6, **dadurch gekennzeichnet, dass** die Steuermittel (18) ausgebildet sind, um das Elektroventil (50a, 50b) so zu steuern, dass das vom Fluidaustritt (20) kommende Fluid zu einem Ablaufbehälter (52) geleitet wird, wenn die von dem Fühler gemessene Temperatur die Solltemperatur noch nicht erreicht hat.

8. Vorrichtung nach einem der Ansprüche 1 bis 6, **dadurch gekennzeichnet, dass** die Steuermittel ausgebildet sind, um das Elektroventil so zu steuern, dass das vom Fluidaustritt kommende Fluid zu einer Rezirkulierungsschleife geleitet wird, wenn die von dem Fühler gemessene Temperatur die Solltemperatur noch nicht erreicht hat, und dass die Vorrichtung eine Pumpe zur Rezirkulierung umfasst.

9. Vorrichtung nach einem der Ansprüche 1 bis 8, umfassend einen Extraktionsmodus und einen Dampferzeugungsmodus, **dadurch gekennzeichnet, dass** die Steuermittel (18) ausgebildet sind, um im Extraktionsmodus ein erstes Elektroventil (50a) so zu steuern, dass das Fluid zu einer Extraktionsvorrichtung (26) geleitet wird, wenn die gemessene Temperatur die Solltemperatur erreicht hat, und im Dampferzeugungsmodus ein zweites Elektroventil (50b) so zu steuern, dass das Fluid zu einer Dampfausstoßdüse (56) geleitet wird, wenn die gemessene Temperatur die Solltemperatur erreicht hat.

10. Vorrichtung nach einem der Ansprüche 1 bis 9, **dadurch gekennzeichnet, dass** die Steuermittel (18) und die Schaltmittel (16) ausgebildet sind, um den Heizkörper so zu steuern, dass das zu erhitzende Fluid von einer ersten Temperatur auf eine Solltemperatur in dem Bereich des Kanals (12) gebracht wird, in dem der Fühler (48) angeordnet ist, wobei die Solltemperatur in Abhängigkeit von der gewünschten Austrittstemperatur veränderlich ist, und zwar insbesondere bei der Erzeugung von Kaffee, Schokolade oder einem anderen Getränk.

Fig. 1

Fig. 2

Fig. 3

Fig. 4

Fig. 5

EP 1 913 851 B1

15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1380243 A
- US 6459854 B
- GB 2152012 A
- US 6246831 B
- EP 512468 A